# EUROPÄISCHE PATENTSCHRIFT

(11) **EP 2 869 948 B1**
(45) Veröffentlichungstag und Bekanntmachung des Hinweises auf die Patenterteilung: **28.11.2018**
(21) Anmeldenummer: 13732140.2
(22) Anmeldetag: 26.06.2013
(51) Int. Cl.: B21F 3/02, F16B 37/12

(54) **VERFAHREN ZUR HERSTELLUNG VON GEWINDETEILEN**
METHOD FOR PRODUCING THREADED PARTS
PROCÉDÉ DE PRODUCTION DE PIÈCES FILETÉES

(30) Priorität: 03.07.2012 DE 102012105890
(43) Veröffentlichungstag der Anmeldung: 13.05.2015
(73) Patentinhaber: Schwarzbich, Jörg, 33615 Bielefeld (DE)
(72) Erfinder: Schwarzbich, Jörg, 33615 Bielefeld (DE)
(74) Vertreter: Ter Meer Steinmeister & Partner
(86) Internationale Anmeldenummer: PCT/EP2013/063392
(87) Internationale Veröffentlichungsnummer: WO 2014/005901

(56) Entgegenhaltungen:
- DE-C- 732 020
- DE-U1-202006 012 713
- GB-A- 2 186 937
- US-A- 3 162 228
- US-A- 4 040 462
- US-A1- 2004 093 973

## Beschreibung

Die Erfindung betrifft ein Verfahren zur Herstellung eines Gewindeteils.

Insbesondere betrifft die Erfindung Verfahren zur Herstellung von zylindrischen Hülsen mit Innen- und/oder Außengewinde.

Bei herkömmlichen Verfahren wird zunächst ein Drehteil mit zylindrischer Innen- bzw. Außenfläche hergestellt, in die dann ein Gewinde eingeschnitten oder eingerollt wird.

Aus DE 20 2006 012 713 U1 ist ein Verfahren nach dem Oberbegriff des Anspruchs 1 bekannt.

DE 732 020 C beschreibt ein Verfahren nach dem Oberbegriff des Anspruchs 2.

Aufgabe der Erfindung ist es, Verfahren anzugeben, die eine kostengünstige Herstellung von Gewindeteilen ermöglichen.

Diese Aufgabe wird erfindungsgemäß durch die in den unabhängigen Ansprüchen 1 und 2 angegebenen Verfahren gelöst.

In einer Ausführungsform weist das Verfahren die folgenden Schritte auf:
- Bereitstellen eines Drahtes aus Metall mit einem nicht-rechteckigen Querschnitt,
- Aufwickeln des Drahtes zu einer Schraubenfeder mit auf Block liegenden Windungen, und
- Verbinden der Windungen mit einander an ihren aneinander anliegenden Berührungsflächen, wobei die Windungen durch Widerstandsschweißung miteinander verschweißt werden, indem man die Schraubenfeder zwischen Elektroden einspannt und einen Strom durch die Schraubenfeder fließen lässt, wodurch die Windungen aufgrund des elektrischen Widerstands an den Berührungsflächen miteinander verschweißt werden.

Aufgrund der nicht-rechteckigen Querschnittsform des Drahtes weist die Schraubenfeder auf der Innenseite und/oder der Außenseite keine glatte, zylindrische Oberfläche auf, sondern vielmehr eine Oberfläche, die eine im Rhythmus der Windungen wechselnde Folge von Erhebungen und Vertiefungen aufweist. Diese Erhebungen und Vertiefungen bilden dann die Gewindestege und -nuten des Gewindeteils.

In einer anderen Ausführungsform hat der Draht einen rechteckigen oder quadratischen Querschnitt, doch ist der Draht so orientiert, dass die Seiten des Rechtecks schräg zur Achse der Schraubenfeder verlaufen. Bei einem quadratischen Drahtquerschnitt berühren sich die Quadrate, die den Querschnitten der einzelnen Windungen entsprechen, nur mit zwei gegenüberliegenden Ecken, während von den beiden übrigen Ecken des Quadrats eine nach innen zur Achse der Schraubenfeder und die andere nach außen weist, so dass auf der Innenseite der Schraubenfeder ein Innengewinde und zugleich auf der Außenseite eine Außengewinde gebildet wird.

Die einzelnen Schritte des erfindungsgemäßen Verfahrens lassen sich sehr rationell und kostengünstig ausführen, so dass die Gewindeteile insgesamt zu geringeren Kosten hergestellt werden können als mit herkömmlichen Verfahren, bei denen Bearbeitungsschritte wie Drehen, Gewindeschneiden und dergleichen erforderlich sind.

Ein weiterer Vorteil besteht darin, dass die so hergestellten Gewindeteile ein geringeres Gewicht haben. Insbesondere bei einem Einsatz in der Kraftfahrzeugindustrie kann so angesichts der Vielzahl der Gewindeteile eine signifikante Gewichtsersparnis erreicht werden.

Da für die Herstellung des Gewindeteils praktisch keine spanende Bearbeitung erforderlich ist, kann zum Wickeln der Schraubenfeder ein hochfester Federstahldraht verwendet werden, so dass man ein entsprechend hochbelastbares Gewinde erhält.

Vorteilhafte Ausgestaltungen der Erfindung sind in den Unteransprüchen angegeben.

Gewindeteile, die nach dem erfindungsgemäßen Verfahren hergestellt sind, können beispielsweise zur Bildung von Toleranzausgleichselementen in Vorrichtungen zur Verbindung von Bauteilen benutzt werden.

In einer vorteilhaften Ausführungsform wird an mindestens einem Ende der Schraubenfeder ein Abschlussstück angebracht, das eine zu der letzten Windung der Schraubenfeder komplementäre Nut aufweist. In dieser Nut wird die das Ende der Schraubenfeder bildende Windung so aufgenommen, dass die Schraubenfeder stabil an dem Abschlussstück abgestützt wird, und zwar in einer Position, in der die Achse der Schraubenfeder mit der Achse des Anschlussstücks zusammenfällt bzw. exakt rechtwinklig zu der Stirnfläche des Abschlussstücks verläuft, in der sich die erwähnte Nut befindet.

Im folgenden werden Ausführungsbeispiele anhand der Zeichnung näher erläutert.

Es zeigen:
- Fig. 1-3: schematische Ansichten zur Erläuterung verschiedener Schritte des erfindungsgemäßen Verfahrens;
- Fig. 4 bis 8: Beispiele für Gewindeteile, die aus Drähten mit unterschiedlichen Querschnittsformen gewickelt sind;
- Fig. 9: Eine Explosions-Schnittdarstellung einer Schraube, die nach einer anderen Ausführungsform des erfindungsgemäßen Verfahrens hergestellt wird; und
- Fig. 10: einen Schnitt durch die fertige Schraube nach Fig. 9.

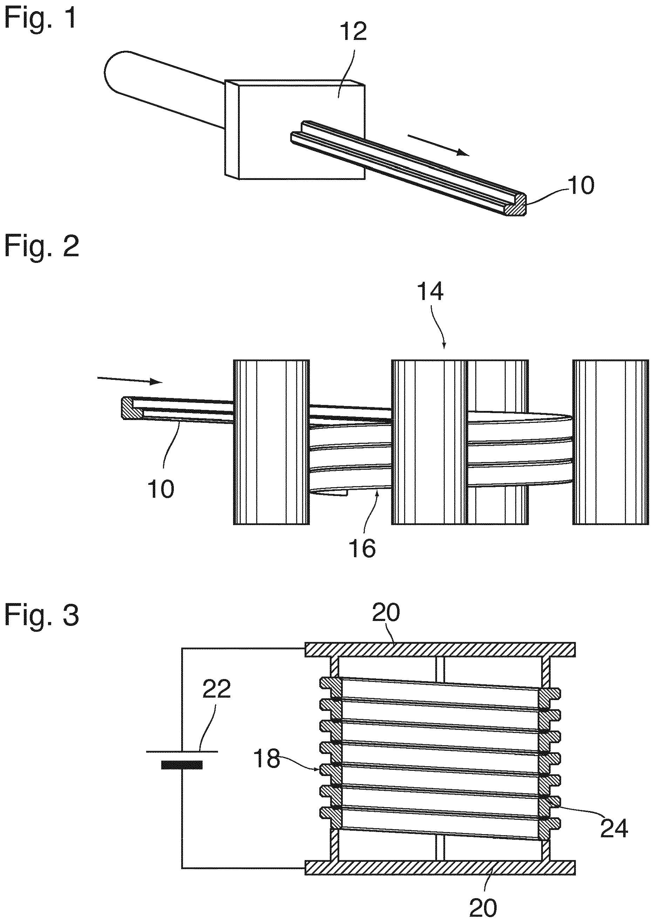

Gemäß Fig. 1 wird ein Draht 10, beispielsweise ein Metalldraht, durch eine Ziehschablone 12 gezogen, in der der Draht eine nicht-rechteckige Querschnittsform erhält. Im gezeigten Beispiel erhält der Draht 10 einen L-förmigen Querschnitt. Wahlweise kann ein Draht mit der gewünschten Querschnittsform auch durch Walzen bereitgestellt werden.

Gemäß Fig. 2 wird der Draht 10 in eine Wickelvorrichtung 14 zugeführt und zu einer endlosen Schraubenfeder 16 mit auf Block liegenden Windungen gewickelt. Im gezeigten Beispiel wird der Draht 10 dabei so zugeführt, dass der in Axialrichtung der Schraubenfeder verlaufende Schenkel des L-förmigen Querschnitts außen liegt, während der radiale Schenkel nach innen weist. Die axialen Schenkel bilden zusammen eine im wesentlichen zylindrische Außenfläche der Schraubenfeder 16, während die radialen Schenkel auf der Innenseite der Schraubenfeder 16 ein Innengewinde mit einer abwechselnden Folge von Gewindenuten und -stegen bilden.

Wenn ein Gewindeteil mit einem Außengewinde hergestellt werden soll, wird der Draht 10 in einer anderen Orientierung zugeführt, so dass der axiale Schenkel innen liegt und der radiale Schenkel nach außen weist. Ein Beispiel einer auf diese Weise hergestellten Schraubenfeder 18 ist in Fig. 3 in einem axialen Schnitt dargestellt.

Die Schraubenfeder 16 oder 18 wird dann auf die gewünschte Länge geschnitten und zwischen Elektroden 20 eingespannt, wie in Fig. 3 gezeigt ist. Die Elektroden bestehen vorzugsweise aus einem Material, das eine höhere Leitfähigkeit hat als der Draht 10, beispielsweise aus Kupfer. Wenn die Elektroden 20 an eine Spannungsquelle 22 angeschlossen werden, fließt ein Strom in axialer Richtung durch die Schraubenfeder 18. Der größte elektrische Widerstand tritt dabei jeweils an den Stellen auf, an denen die Windungen des Drahtes aneinander anliegen. Wahlweise kann der Widerstand dadurch gezielt erhöht werden, dass man dem Draht 10 ein Profil gibt, das an der Stelle, an der später die Windungen aneinanderliegen, eine schmale Rippe aufweist, so dass sich die Windungen nur auf einer entsprechend kleineren Querschnittsfläche berühren.

Aufgrund des hohen elektrischen Widerstands werden die Windungen des Drahtes an die Stellen, an denen sie sich berühren, miteinander verschweißt. Die entsprechenden Schweißstellen sind in Fig. 3 mit dem Bezugszeichen 24 bezeichnet.

Insgesamt erhält man so ein Gewindeteil in der Form einer starren zylindrischen Hülse, die je nach Orientierung des Drahtes beim Aufwickeln ein Innengewinde und/oder ein Außengewinde aufweist. Je nach Wahl des Wickelsinns lässt sich auch wahlweise ein Rechtsgewinde oder Linksgewinde erhalten. Ebenso können durch Verwendung mehrerer parallel zugeführter Drähte auch mehrgängige Gewinde erzeugt werden. Das Gewindeprofil wird letztlich durch das Profil des Drahtes 10 bestimmt und lässt sich daher durch geeignete Wahl des Drahtprofils einstellen. Bei entsprechender Profilierung des Drahtes lassen sich auch Gewindeteile herstellen, die sowohl ein Innengewinde als auch ein Außengewinde aufweisen.

Ebenso ist es möglich, die eigentliche Gewindehülse an einem Ende oder beiden Enden mit Abschlusstücken aus Metall zu verschweißen. Die Verschweißung kann dabei in einem Schritt mit dem Verschweißen der Windungen erfolgen. Schließlich ist es auch möglich, die Gewindehülse auf ein Metallteil aufzuschrumpfen, so dass man beispielsweise einen massiven Gewindebolzen erhält. Umgekehrt kann eine Gewindehülse mit Innengewinde in eine Bohrung eines größeren Bauteils eingepresst oder eingeschweißt werden.

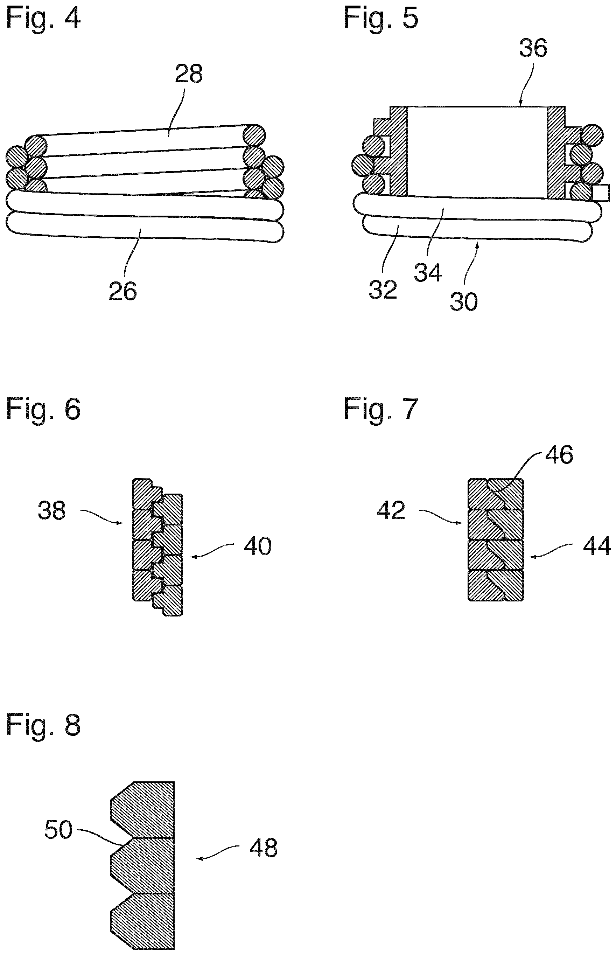

Figuren 4 bis 8 zeigen Beispiele für andere mögliche Gestaltungen von Gewindeteilen.

In Fig. 4 wird ein Innengewindeteil 26 durch eine auf Block gewickelte Schraubenfeder aus Runddraht gebildet. Entsprechend wird auch ein dazu passendes Außengewindeteil durch eine auf Block gewickelte Schraubenfeder aus Runddraht gebildet. Aufgrund des runden Querschnitts des Drahtes werden auf der Innenseite des Innengewindeteils 26 zwischen den einzelnen Windungen schraubenförmig umlaufende Vertiefungen gebildet, in die die äußeren Scheitel der Windungen des Außengewindeteils eingreifen können, so dass ein Gewindeeingriff erreicht wird.

Fig. 5 zeigt ein Beispiel, bei dem ein Innengewindeteil 30 durch zwei ineinander geschachtelte Schraubenfedern 32 und 34 gebildet wird, deren Windungen einander abwechseln und aneinander anliegen. Die Schraubenfeder 32 hat einen etwas kleineren Durchmesser als die Schraubenfeder 34 und bildet so ein Innengewinde, dessen Gewindenuten breiter und tiefer sind als in Fig. 4. In dieses Innengewinde kann dann ein entsprechendes Außengewindeteil 36 eingreifen. Im gezeigten Beispiel ist das Außengewindeteil ein Drehteil aus Metall mit einem gerollten oder geschnittenen Gewinde.

Fig. 6 zeigt ein Ausführungsbeispiel, bei dem wieder beide Gewindeteile 38 und 40 aus Draht gewickelt sind. Gezeigt ist hier nur ein Ausschnitt aus der Umfangswand der miteinander in Gewindeeingriff stehenden Gewindeteile. Der Draht beider Gewindeteile hat in diesem Beispiel einen T-förmigen Querschnitt. Die "Querbalken" des T liegen jeweils auf Block aneinander, während die Mittelstege des T die ineinander greifenden Gewindenuten und Gewindestege bilden.

In Fig. 7 sind ein Innengewindeteil 42 und ein Außengewindeteil 44 aus einem Draht gewickelt, dessen Querschnittsform der L-Form gemäß Fig. 1 und 2 entspricht, jedoch mit dem Unterschied, dass die komplementären Gewindenuten und -stege schräge Flanken 46 haben.

Fig. 8 zeigt schließlich einen Teilschnitt eines Außengewindeteils 48, das aus einem Draht mit sechseckigem Querschnitt gebildet wird. Die auf der Innenseite der Schraubenfeder liegenden Ecken sind 90°-Ecken, so dass die Windungen des Drahtes hier eine glatte Innenfläche der Schraubenfeder bilden, während auf der Außenseite im Querschnitt dreieckige Gewindenuten 50 eines Außengewindes gebildet werden.

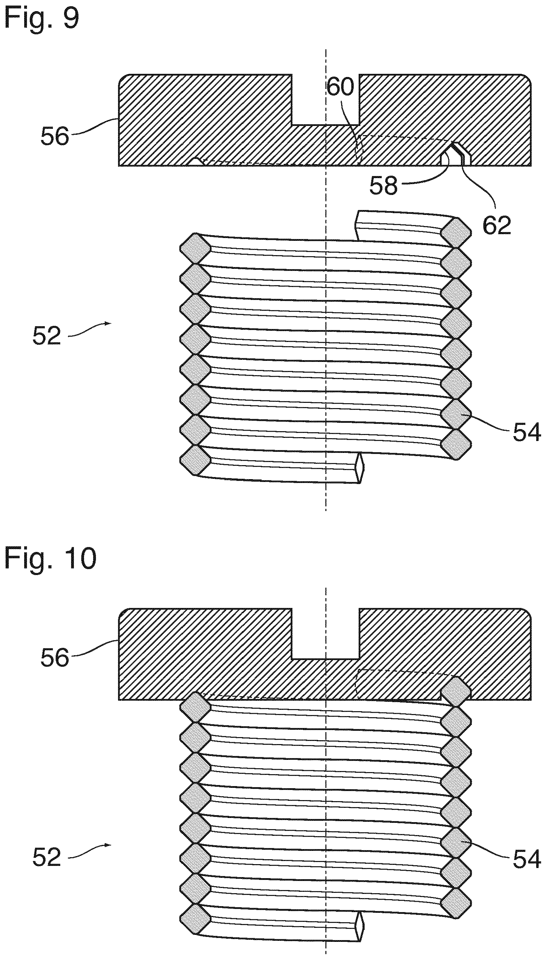

Fig. 9 zeigt in einer Explosionsdarstellung ein Gewindeteil 52 in der Form einer Schlitzkopfschraube. Der Gewindeschaft besteht aus einer Schraubenfeder, die aus einem Draht 54 gewickelt ist, der in diesem Fall einen quadratischen Querschnitt hat, mit leicht abgerundeten oder abgefasten Ecken. Der Draht wird in einer solchen Orientierung zugeführt, dass die Querschnittsform einer Raute, also einem auf der Spitze stehenden Quadrat entspricht. Die auf Block aufeinanderliegenden Windungen berühren sich nur mit den einander zugewandten Ecken der Quadrate, während die beiden übrigen Ecken jedes Quadrats ein Innengewinde auf der Innenseite der Schraubenfeder sowie ein Außengewinde auf der Außenseite bilden.

An einem Ende der Schraubenfeder wird ein Abschlussstück 56 befestigt, das hier den Schlitzkopf der Schraube bildet. Dieses Abschlussstück 56 weist auf der der Schraubenfeder zugewandten ebenen Fläche eine eingeprägte oder eingepresste ringförmige Nut 58 auf, deren Tiefe in Umfangsrichtung so variiert, dass die Nut zu der letzten Windung der Schraubenfeder komplementär ist. Das Ende des Drahtes 54 stützt sich an einer in der Nut 58 gebildeten Stirnfläche 60 ab, an der die Tiefe der Nut sprunghaft von einem Maximalwert (entsprechend der Ganghöhe des Gewindes) auf null abnimmt, um dann stetig wieder zuzunehmen. Auf diese Weise wird die Schraubenfeder so an dem Abschlussstück 56 abgestützt, dass ihre Achse genau rechtwinklig zu der Fläche des Abschlussstücks orientiert ist, in dem die Nut 58 gebildet ist.
Die Verbindung der Schraubenfeder mit dem Abschlussstück kann wieder durch Schweißen hergestellt werden, im Fall von Metallteilen beispielsweise durch Widerstandsschweißen. Um am Übergang von dem Abschlussstück 56 zu dem Draht 54 der Schraubenfeder einen hohen Widerstand zu erhalten, können in die Innenwand der Nut 58 kleine Vorsprünge oder Rippen 62 eingeprägt sein, die zunächst die Berührungsfläche verkleinern und dann beim Schweißen weggeschmolzen werden.

## Patentansprüche

1. Verfahren zur Herstellung eines Gewindeteils, mit den folgenden Schritten:
- Bereitstellen eines Drahtes (10) aus Metall mit einem nicht-rechteckigen Querschnitt,
- Aufwickeln des Drahtes (10) zu einer Schraubenfeder (16; 18) mit auf Block liegenden Windungen, und
- Verbinden der Windungen mit einander an ihren aneinander anliegenden Berührungsflächen,
**dadurch gekennzeichnet, dass** die Windungen durch Widerstandsschweißung miteinander verschweißt werden, indem man die Schraubenfeder (16; 18) zwischen Elektroden (20) einspannt und einen Strom durch die Schraubenfeder fließen lässt, wodurch die Windungen aufgrund des elektrischen Widerstands an den Berührungsflächen miteinander verschweißt werden.

2. Verfahren zur Herstellung eines Gewindeteils, mit den folgenden Schritten:
- Bereitstellen eines Drahtes (54) aus Metall mit rechteckigem Querschnitt,
- Aufwickeln des Drahtes (54) zu einer Schraubenfeder mit auf Block liegenden Windungen, wobei der Draht so zugeführt wird, dass die Seiten des den Querschnitt definierenden Rechtecks schräg zur Achse der Schraubenfeder verlaufen, und
- Verbinden der Windungen mit einander an ihren aneinander anliegenden Berührungsflächen,
**dadurch gekennzeichnet, dass** die Windungen durch Widerstandsschweißung miteinander verschweißt werden, indem man die Schraubenfeder zwischen Elektroden (20) einspannt und einen Strom durch die Schraubenfeder fließen lässt, wodurch die Windungen aufgrund des elektrischen Widerstands an den Berührungsflächen miteinander verschweißt werden.

3. Verfahren nach einem der vorstehenden Ansprüche, bei dem an mindestens einem Ende der Schraubenfeder ein Abschlussteil (56) angebracht wird, das die letzte Windung der Schraubenfeder in einer zu dieser Windung komplementären Nut (58) aufnimmt.

## Claims

1. A method of producing a threaded part, comprising the steps of:
- providing a metal wire (10) with a non-rectangular cross-section,
- winding the wire (10) to a helical spring (16; 18) with turns held in tight engagement with one another, and
- joining the turns to one another at their engaging contact surfaces,
**characterized in that** the windings are welded together by resistance welding by clamping the helical spring (16; 18) between electrodes (20) and passing a current through the helical spring, whereby the windings are welded together at the contact surfaces due to the electric resistance.

2. A method of producing a threaded part, comprising the steps of:
- providing a metal wire (54) with a rectangular cross-section,
- winding the wire (54) to a helical spring with turns held in tight engagement with one another, the wire being supplied such that the sides of the rectangle that defines the cross-section are inclined relative to the axis of the helical spring, and
- joining the turns to one another with their engaging contact surfaces,
**characterized in that** the windings are welded together by resistance welding by clamping the helical spring between electrodes (20) and passing a current through the helical spring, whereby the windings are welded together at the contact surfaces due to the electric resistance.

3. The method according to any of the preceding claims, wherein an end piece (56) is fitted to at least one end of the helical spring, said end piece accommodating the last turn of the helical spring in a groove (58) that is complementary to that turn.

## Revendications

1. Procédé pour fabriquer une pièce filetée, comportant les étapes suivantes:
- fournir un fil (10) en métal ayant une section non rectangulaire,
- enrouler le fil (10) de manière à former un ressort hélicoïdal (16 ; 18) avec des spires monoblocs, et
- relier les spires les unes aux autres au niveau de leurs surfaces de contact adjacentes les unes aux autres,
**caractérisé en ce que** les spires sont soudées les unes aux autres par un soudage par résistance, le ressort hélicoïdal (16 ; 18) étant encastrée entre des électrodes (20) et un courant circulant à travers le ressort hélicoïdal, en sorte que les spires sont soudées les unes aux autres au niveau des surfaces de contact en raison de la résistance électrique.

2. Procédé pour fabriquer une pièce filetée, comportant les étapes suivantes:
- fournir un fil (54) en métal ayant une section rectangulaire,
- enrouler le fil (54) de manière à former un ressort hélicoïdal avec des spires monoblocs, le fil étant guidé de sorte que les côtés du rectangle définissant la section s'étendent inclinés par rapport à l'axe du ressort hélicoïdal, et
- assembler les spires les unes aux autres au niveau de leurs surfaces de contact adjacentes les unes aux autres,
**caractérisé en ce que** les spires sont soudées les unes aux autres par un soudage par résistance, le ressort hélicoïdal étant encastré entre des électrodes (20) et un courant circulant à travers le ressort hélicoïdal, en sorte que les spires sont soudées les unes aux autres au niveau des surfaces de contact en raison de la résistance électrique.

3. Procédé selon l'une des revendications précédentes, dans lequel sur au moins une extrémité du ressort hélicoïdal est fixée une pièce terminale (56) qui reçoit la dernière spire du ressort hélicoïdal dans une rainure (58) complémentaire de cette spire.
